# EUROPEAN PATENT APPLICATION

(11) **EP 4 414 391 A1**
(43) Date of publication of application: **14.08.2024**
(21) Application number: 23878368.2
(22) Date of filing: 09.06.2023
(51) Int. Cl.: C08F 8/42, C08F 8/32, C08F 236/04

(54) **MODIFYING AGENT, MODIFIED CONJUGATED DIENE-BASED POLYMER COMPRISING SAME, AND METHOD FOR PREPARING POLYMER**

(30) Priority: 19.12.2022 KR 20220178529
(71) Applicant: LG Chem, Ltd., Seoul 07336 (KR)
(72) Inventor: JANG, Jae Kwon, Daejeon 34122 (KR); KIM, Yong Jae, Daejeon 34122 (KR); LEE, Soo Yong, Daejeon 34122 (KR); OH, Kyoung Hwan, Daejeon 34122 (KR); LEE, Tae Hee, Daejeon 34122 (KR)
(74) Representative: Plasseraud IP
(86) International application number: PCT/KR2023/007923
(87) International publication number: WO 2024/135957

(57) **Abstract**

The present invention relates to a modifier, which is useful for modifying a conjugated diene-based polymer, has excellent affinity with a filler and improves the compounding properties of the conjugated diene-based polymer, a modified conjugated diene-based polymer comprising a functional group derived from the modifier and a method for preparing the modified conjugated diene-based polymer.

## Description

### TECHNICAL FIELD

### Cross-reference to Related Applications

The present application claims the benefit of priority based on Korean Patent Application No. 10-2022-0178529, filed on December 19, 2022, the entire contents of which are incorporated herein by reference.

### Technical Field

The present invention relates to a modifier, which is useful for modifying a conjugated diene-based polymer, has excellent affinity with a filler and improves the compounding properties of the conjugated diene-based polymer, a modified conjugated diene-based polymer comprising a functional group derived from the modifier and a method for preparing the modified conjugated diene-based polymer.

### BACKGROUND ART

According to the recent demand for cars having a low fuel consumption ratio, a conjugated diene-based polymer having modulational stability represented by wet skid resistance as well as low rotation resistance, and excellent abrasion resistance and tensile properties is required as a rubber material for tires.

In order to reduce the rotation resistance of tires, there is a method of reducing hysteresis loss of vulcanized rubber, and rebound resilience at 50°C to 80°C, tan δ, Goodrich heating, or the like is used as an evaluation index of the vulcanized rubber. That is, it is desirable to use a rubber material having high rebound resilience at the above temperature or a low tan δ value or Goodrich heating.

Natural rubbers, polyisoprene rubbers, or polybutadiene rubbers are known as rubber materials having low hysteresis loss, but these rubbers have a limitation of low wet skid resistance. Thus, recently, conjugated diene-based polymers or copolymers such as styrene-butadiene rubbers (hereinafter, referred to as "SBR") and butadiene rubbers (hereinafter, referred to as "BR"), are prepared by emulsion polymerization or solution polymerization to be used as rubbers for tires. Among these polymerization methods, the greatest advantage of the solution polymerization in comparison to the emulsion polymerization is that the vinyl structure content and the styrene content, which specify physical properties of the rubber, may be arbitrarily adjusted and its molecular weight and physical properties may be controlled by coupling or modification. Thus, the SBR prepared by the solution polymerization is widely used as a rubber material for tires because it is easy to change a structure of the finally prepared SBR or BR, and movement of chain terminals may be reduced and a coupling force with a filler such as silica and carbon black may be increased by coupling or modification of the chain terminals.

If the solution-polymerized SBR is used as the rubber material for tires, since a glass transition temperature of the rubber is increased by increasing the vinyl content in the SBR, physical properties such as running resistance and braking force, required for tires may be controlled, and fuel consumption may be reduced by appropriately adjusting the glass transition temperature. The solution-polymerized SBR is prepared by using an anionic polymerization initiator and is being used by coupling or modifying the chain terminals of the polymer thus formed using various modifiers. For example, U.S. Patent No. 4,397,994 discloses a method of coupling active anions of the chain terminals of a polymer obtained by polymerizing styrene-butadiene using alkyllithium which is a monofunctional initiator in a non-polar solvent, using a coupling agent such as a tin compound.

Meanwhile, as a reinforcing filler of tire treads, carbon black, silica, or the like is used. If silica is used as the reinforcing filler, there are advantages of improving low hysteresis loss and wet skid resistance. However, silica having hydrophilic surface has defects of low affinity and poor dispersibility in contrast to carbon black having hydrophobic surface, and in order to improve dispersibility or providing coupling between silica-rubber, a separate silane coupling agent is required. Accordingly, a method of introducing a functional group having affinity or reactivity with silica at the terminal of a rubber molecule is applied, but effects are insufficient.

### [Prior Art Document]

### [Patent Document]

(Patent Document 1) US 4397994 A

### DISCLOSURE OF THE INVENTION

### TECHNICAL PROBLEM

An object of the present invention is to provide a modifier, which is useful for modifying a conjugated diene-based polymer, has excellent affinity with a filler and improves the compounding properties of the conjugated diene-based polymer.

### TECHNICAL SOLUTION

To solve the above-described task, the present invention provides a modifier having a novel structure.
(1) The present invention provides a modifier represented by Formula 1. 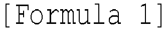 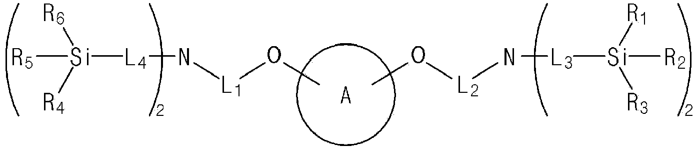 In Formula 1,
   A is an arylene group of 6 to 20 carbon atoms or a heteroarylene group of 5 to 20 carbon atoms,
   L₁ and L₂ are each independently an alkylene group of 1 to 20 carbon atoms,
   L₃ and L₄ are each independently an alkylene group of 1 to 20 carbon atoms, and
   R₁ to R₆ are each independently an alkyl group of 1 to 10 carbon atoms or an alkoxy group of 1 to 20 carbon atoms, where at least one among R₁ to R₃ is an alkoxy group of 1 to 20 carbon atoms, and at least one among R₄ to R₆ is an alkoxy group of 1 to 20 carbon atoms.
(2) The present invention provides the modifier according to (1), wherein, in Formula 1, A is an arylene group of 6 to 10 carbon atoms or a heteroarylene group of 5 to 10 carbon atoms.
(3) The present invention provides the modifier according to (1) or (2), wherein, in Formula 1, L₁ and L₂ are each independently an alkylene group of 1 to 10 carbon atoms, L₁ and L₂ are the same, L₃ and L₄ are each independently an alkylene group of 1 to 10 carbon atoms, and L₃ and L₄ are the same.
(4) The present invention provides the modifier according to any one among (1) to (3), wherein, in Formula 1, R₁ to R₆ are each independently an alkoxy group of 1 to 10 carbon atoms.
(5) The present invention provides the modifier according to any one among (1) to (4), wherein the modifier represented by Formula 1 is selected from compounds represented by Formula 1A and Formula 1B. 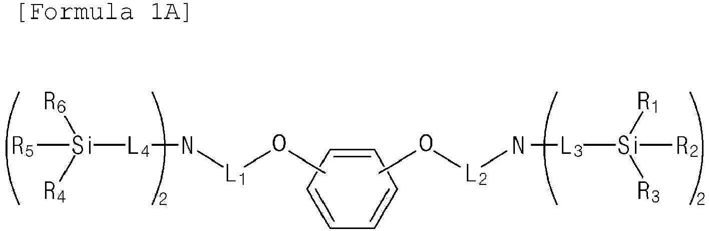 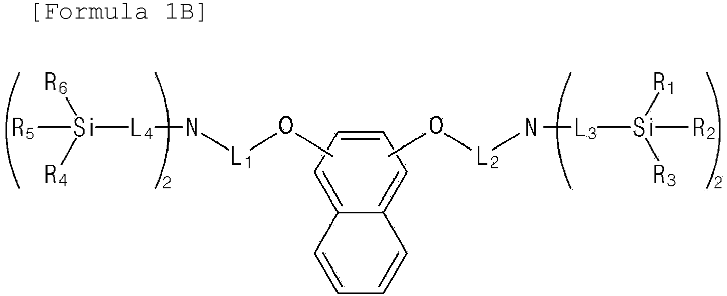 In Formula 1A and Formula 1B,
   the definition of L₁ to L₄ and R₁ to R₆ is the same as the definition in Formula 1.
(6) The present invention provides the modifier according to any one among (1) to (5), wherein the modifier represented by Formula 1 is selected from compounds represented by Formula 1-1 and Formula 1-2.

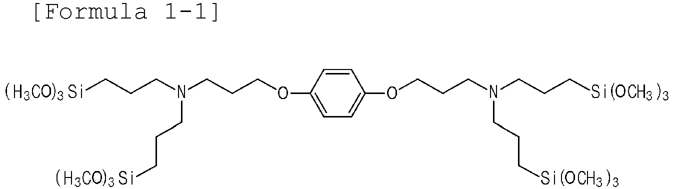

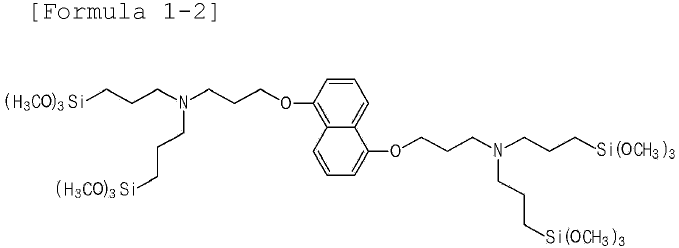

### ADVANTAGEOUS EFFECTS

A modified conjugated diene-based polymer may be prepared in a high modification ratio, and a modified conjugated diene-based polymer having excellent affinity with a filler and showing excellent processability properties and compounding properties may be prepared, by using the modifier according to the present invention.

### BEST MODE FOR CARRYING OUT THE INVENTION

Hereinafter, the present invention will be described in more detail in order to assist the understanding of the present invention.

It will be understood that words or terms used in the description and claims of the present invention shall not be interpreted as the meaning defined in commonly used dictionaries. It will be further understood that the words or terms should be interpreted as having a meaning that is consistent with their meaning of the technical idea of the invention, based on the principle that an inventor may properly define the meaning of the words or terms to best explain the invention.

Hereinafter, the present invention will be explained in detail.

### Definition of Terms

In the present invention, the term "substituted" may mean that hydrogen of a functional group, an atomic group or a compound is substituted with a specific substituent, and if the hydrogen of a functional group, an atomic group or a compound is substituted with a specific substituent, one or a plurality including two or more substituents may be present according to the number of hydrogen present in the functional group, the atomic group or the compound, and if there are a plurality of substituents, the substituents may be the same or different.

In the present invention, the term "alkyl group" may mean monovalent aliphatic saturated hydrocarbon, and may include both a linear alkyl group such as methyl, ethyl, propyl and butyl and a branched alkyl group such as isopropyl, sec-butyl, tert-butyl and neo-pentyl.

In the present invention, the term "alkylene group" may mean divalent aliphatic saturated hydrocarbon such as methylene, ethylene, propylene and butylene.

In the present invention, the term "alkoxy group" may include all of a functional group, atomic group and compound, in which hydrogen at the terminal of an alkyl group is substituted with an oxygen atom, like methoxy, ethoxy, propoxy and butoxy.

In the present invention, the term "heteroalkyl group" may mean an alkyl group, in which carbon atoms (excluding a terminal carbon atom) in the alkyl group are substituted with one or more heteroatoms.

In the present invention, the term "cycloalkyl group" may mean cyclic saturated hydrocarbon.

In the present invention, the term "aryl group" may mean aromatic hydrocarbon, and may include both monocyclic aromatic hydrocarbon, in which one ring is formed, and polycyclic aromatic hydrocarbon, in which two or more rings are bonded.

In the present invention, the term "heteroarylene group" may include all aryl groups, in which carbon atoms in the aryl group are substituted with one or more heteroatoms.

In the present invention, the terms "derived unit" and "derived functional group" may mean a component or a structure comes from a certain material, or the material itself.

The present invention provides a modifier represented by Formula 1.

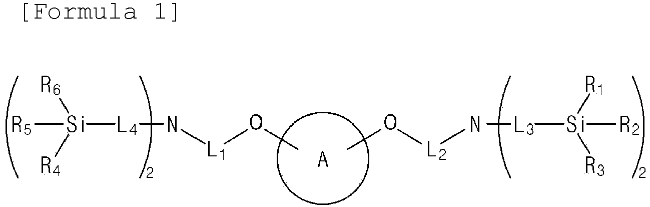

In Formula 1,
A is an arylene group of 6 to 20 carbon atoms or a heteroarylene group of 5 to 20 carbon atoms,
L₁ and L₂ are each independently an alkylene group of 1 to 20 carbon atoms,
L₃ and L₄ are each independently an alkylene group of 1 to 20 carbon atoms, and
R₁ to R₆ are each independently an alkyl group of 1 to 10 carbon atoms or an alkoxy group of 1 to 20 carbon atoms, where at least one among R₁ to R₃ is an alkoxy group of 1 to 20 carbon atoms, and at least one among R₄ to R₆ is an alkoxy group of 1 to 20 carbon atoms.

Particularly, in Formula 1, A is an arylene group of 6 to 20 carbon atoms or a heteroarylene group of 5 to 20 carbon atoms, or may be an arylene group of 6 to 10 carbon atoms or a heteroarylene group of 5 to 10 carbon atoms. Particularly, A may be an arylene group including a phenylene group, a naphthalene group, a biphenylene group, an anthracenylene group, a phenanthrenylene group, a fluorenylene group, or the like, or may be a heteroarylene group including one or more among O, N, S and P atoms as heteroatoms, including a pyridinylene group, a pyrimidinylene group, a triazinylene group, a thiophenylene group, a furanylene group, a dibenzothiophenylene group, a dibenzofuranylene group, a carbazolylene group, or the like.

Particularly, in Formula 1, L₁ to L₄ may be each independently an alkylene group of 1 to 20 carbon atoms, L₁ and L₂ may be each independently an alkylene group of 1 to10 carbon atoms, L₁ and L₂ may be the same, L₃ and L₄ may be each independently an alkylene group of 1 to 10 carbon atoms, and L₃ and L₄ may be the same. For example, L₁ and L₂ may be the same, and may be an alkylene group of 1 to 10 carbon atoms, an alkylene group of 1 to 6 carbon atoms, a methylene group, an ethylene group, a propylene group, a butylene group, or the like, and L₃ and L₄ may be the same, and may be an alkylene group of 1 to 10 carbon atoms, an alkylene group of 1 to 6 carbon atoms, a methylene group, an ethylene group, a propylene group, a butylene group, or the like. All L₁ to L₄ may be propylene groups.

Particularly, in Formula 1, R₁ to R₆ may be each independently an alkyl group of 1 to 10 carbon atoms or an alkoxy group of 1 to 10 carbon atoms, where at least one among R₁ to R₃ may be an alkoxy group of 1 to 10 carbon atoms, and at least one among R₄ to R₆ may be an alkoxy group of 1 to 10 carbon atoms. More particularly, all R₁ to R₆ may be alkoxy groups of 1 to 10 carbon atoms, for example, alkoxy groups of 1 to 6 carbon atoms, alkoxy groups of 1 to 3 carbon atoms, methoxy groups, ethoxy groups, or the like.

Particularly, the modifier represented by Formula 1 may be selected from compounds represented by Formula 1A and Formula 1B.

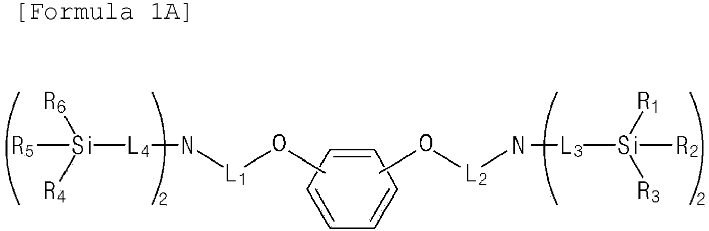

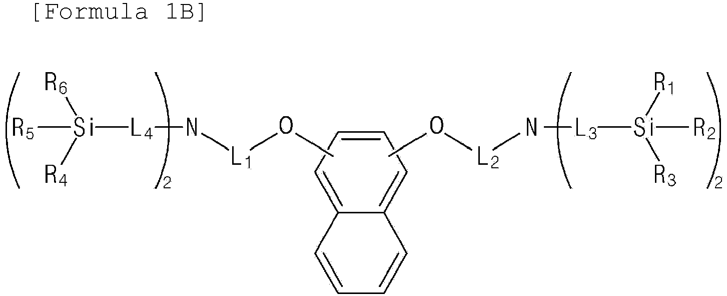

In Formula 1A and Formula 1B,
the definition of L₁ to L₄ and R₁ to R₆ is the same as the definition in Formula 1.

The modifier represented by Formula 1 includes lots of alkoxysilane functional groups in contrast to the conventional modifier, and the preparation of a modified conjugated diene-based polymer having a high molecular weight is possible, and since there is a functional group having affinity with silica, like O and N, excellent compounding properties may be shown due to the interaction with a silica-based filler. In addition, since the modifier represented by Formula 1 itself forms a plane structurally, a coupling reaction with a polymer during a modification process may be performed easily.

The modifier represented by Formula 1 may be selected from compounds represented by Formula 1-1 and Formula 1-2.

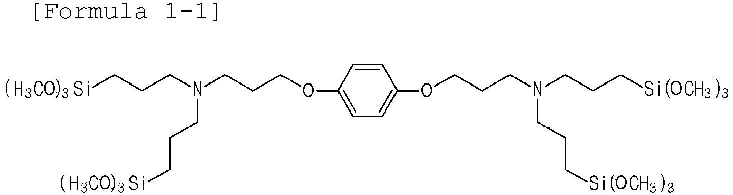

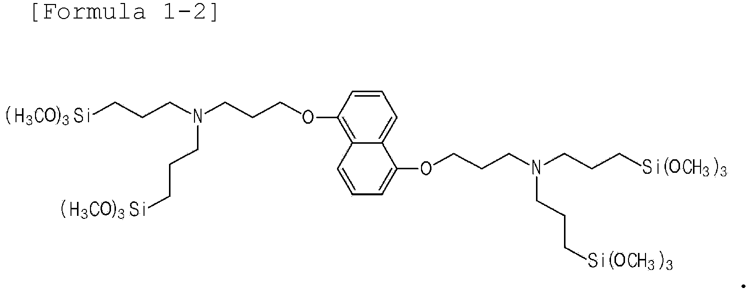

The modifier represented by Formula 1 according to the present invention may be prepared through the reacting steps a compound represented by Formula 2 with a compound represented by Formula 3 or Formula 4.

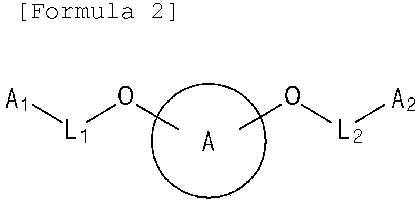

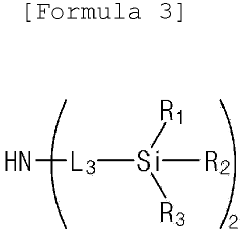

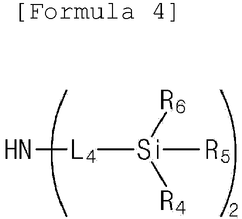

In Formula 2, A₁ and A₂ may be each independently a halogen atom, particularly, Cl.

In Formula 2 to Formula 4, the definition for each substituent is the same as the definition above.

In the step, the compound represented by Formula 2, and the compound represented by Formula 3 or Formula 4 may react in a molar ratio of 1: 1.5 to 1: 5.0, in a molar ratio of 1: 1.5 to 1: 3.0, or in a molar ratio of 1: 1.5 to 1: 2.5.

In the step, the reaction of the compound represented by Formula 2, and the compound represented by Formula 3 or Formula 4 may be performed at a temperature of 20 to 200°C, 30 to 180°C, or 40 to 150°C for 1 to 72 hours.

By using the modifier represented by Formula 1 of the present invention, a modified conjugated diene-based polymer including a repeating unit derived from a conjugated diene-based monomer and a functional group derived from the modifier represented by Formula 1 in at least one terminal, may be prepared.

The repeating unit derived from the conjugated diene-based monomer may mean a repeating unit formed during polymerizing a conjugated diene-based monomer, and the conjugated diene-based monomer may be, for example, one or more selected from the group consisting of 1,3-butadiene, 2,3-dimethyl-1,3-butadiene, piperylene, 3-butyl-1,3-octadiene, isoprene, 2-phenyl-1,3-butadiene and 2-halo-1,3-butadiene (halo means a halogen atom).

Meanwhile, the modified conjugated diene-based copolymer may be a copolymer additionally including a repeating unit derived from an aromatic vinyl monomer together with the repeating unit derived from the conjugated diene-based monomer.

The repeating unit derived from the aromatic vinyl monomer may mean a repeating unit formed during polymerizing an aromatic vinyl monomer, and the aromatic vinyl monomer may be, for example, one or more selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene, and 1-vinyl-5-hexylnaphthalene.

If the modified conjugated diene-based polymer is a copolymer including the repeating unit derived from an aromatic vinyl monomer, the modified conjugated diene-based polymer may include the repeating unit derived from the conjugated diene-based monomer in at least 20 wt%, 30 wt%, 40 wt%, 50 wt%, 55 wt%, or 60 wt%, and at most 95 wt%, 90 wt%, or 80 wt%, and may include the repeating unit derived from the aromatic vinyl monomer in at least 5 wt%, 10 wt%, or 20 wt%, and at most 80 wt%, 70 wt%, 60 wt%, 55 wt%, 50 wt%, 45 wt%, or 40 wt%. Within these ranges, effects of excellent rotation resistance, wet skid resistance and abrasion resistance may be achieved.

According to an embodiment of the present invention, the copolymer may be a random copolymer, and in this case, effects of excellent balance among physical properties may be shown. The random copolymer may mean the arrangement of the repeating units forming the copolymer in disorder.

The modified conjugated diene-based polymer according to an embodiment of the present invention may have a number average molecular weight (Mn) of 10,000 g/mol to 2,000,000 g/mol, 50,000 g/mol to 1,800,000 g/mol, or 120,000 g/mol to 1,500,000 g/mol, and a weight average molecular weight (Mw) of 10,000 g/mol to 5,000,000 g/mol, 100,000 g/mol to 3,500,000 g/mol, or 120,000 g/mol to 2,000,000 g/mol. Within these ranges, excellent effects of rotation resistance and wet skid resistance may be achieved. In another embodiment, the modified conjugated diene-based polymer may satisfy molecular weight distribution (Mw/Mn) of 1.0 to 8.0, 1.0 to 4.0, or 1.0 to 3.5, and within this range, excellent effects of balance among physical properties may be achieved.

Here, the weight average molecular weight (Mw) and the number average molecular weight (Mn) are polystyrene converted molecular weights analyzed by gel permeation chromatography (GPC), and the molecular weight distribution (Mw/Mn) is also referred to as polydispersibility and is calculated as the ratio (Mw/Mn) of the weight average molecular weight (Mw) to the number average molecular weight (Mn).

In another embodiment, the mooney viscosity of the modified conjugated diene-based polymer may be 20 to 150 at 100°C, or 20 to 150 at 140°C, and within this range, excellent effects of processability and productivity may be achieved.

Here, the mooney viscosity was measured using a mooney viscometer, for example, Large Rotor of MV2000E (ALPHA Technologies Co.) under conditions of 100°C and 140°C and a rotor speed of 2 ± 0.02 rpm. Particularly, a polymer was stood at room temperature (23 ± 5°C) for 30 minutes or more, 27 ± 3 g was collected and put in a die cavity, a platen was operated, and then, the mooney viscosity was measured while applying torque.

In addition, the modified conjugated diene-based polymer may have the vinyl content of 5 wt% or more, 10 wt% or more, or 10 wt% to 60 wt%. Within this range, a glass transition temperature may be controlled in an appropriate range, and excellent effects of rotation resistance, wet skid resistance and a low consumption ratio may be achieved. Here, the vinyl content may mean the content of not 1,4-added but 1,2-added conjugated diene-based monomer based on 100 wt% of the conjugated diene-based copolymer composed of a monomer having a vinyl group and an aromatic vinyl-based monomer.

Meanwhile, the terms "derived repeating unit", "derived functional group" and "derived group" used in the present invention may mean a component or a structure comes from a certain material, or the material itself.

### Method for preparing modified conjugated diene-based polymer

In addition, the present invention provides a method for preparing the modified conjugated diene-based polymer.

The method for preparing the modified conjugated diene-based polymer according to an embodiment of the present invention is characterized in including: (S1) polymerizing a conjugated diene-based monomer, or an aromatic vinyl-based monomer and a conjugated diene-based monomer in a hydrocarbon solvent including an organometallic compound to prepare an active polymer coupled with an organometal (step 1); and (S2) reacting the active polymer and a modifier represented by Formula 1 (step 2).

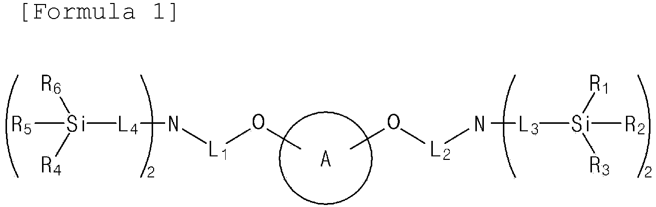

The definition of each substituent of Formula 1 is the same as the definition above.

Step 1 is a step for preparing an active polymer coupled with an organometallic compound and may be performed by polymerizing a conjugated diene-based monomer, or an aromatic vinyl-based monomer and a conjugated diene-based monomer in a hydrocarbon solvent including an organometallic compound.

The hydrocarbon solvent is not specifically limited and may be, for example, one or more selected from the group consisting of n-pentane, n-hexane, n-heptane, isooctane, cyclohexane, toluene, benzene and xylene.

The conjugated diene-based monomer and the aromatic vinyl-based monomer are the same as defined above.

According to an embodiment of the present invention, the organometallic compound may be used in 0.01 to 10 mmol, 0.05 to 5 mmol, 0.1 to 2 mmol, 0.1 to 1 mmol, or 0.15 to 0.8 mmol based on total 100 g of the monomer.

The organometallic compound may be, for example, one or more selected from the group consisting of methyllithium, ethyllithium, propyllithium, n-butyllithium, s-butyllithium, t-butyllithium, hexyllithium, n-decyllithium, t-octyllithium, phenyllithium, 1-naphthyllithium, n-eicosyl lithium, 4-butylphenyl lithium, 4-tolyllithium, cyclohexyllithium, 3,5-di-n-heptylcyclohexyllithium, 4-cyclopentyllithium, naphthylsodium, naphthylpotassium, lithium alkoxide, sodium alkoxide, potassium alkoxide, lithium sulfonate, sodium sulfonate, potassium sulfonate, lithium amide, sodium amide, potassium amide and lithium isopropylamide.

Meanwhile, the polymerization in step 1 may be performed by including a polar additive, and the polar additive may be added in 0.001 g to 50 g, 0.001 g to 10 g, 0.005 g to 0.2 g, or 0.01 g to 0.2 g based on total 100 g of the monomer.

In addition, the polar additive may be one or more selected from the group consisting of tetrahydrofuran, 2,2-di(tetrahydrofuryl)propane, diethyl ether, cyclopentyl ether, dipropyl ether, ethylene dimethyl ether, diethyl glycol, dimethyl ether, tert-butoxyethoxyethane, bis(3-dimethylaminoethyl) ether, (dimethylaminoethyl) ethyl ether, trimethylamine, triethylamine, tripropylamine, and tetramethylethylenediamine, particularly, triethylamine or tetramethylethylenediamine. If the polar additive is included, and if the conjugated diene-based monomer, or the conjugated diene-based monomer and the aromatic vinyl-based monomer are copolymerized, the difference of their reaction rates may be compensated, and effects of inducing easy formation of a random copolymer may be achieved.

The polymerization in step 1 may be, for example, anionic polymerization, and in a particular embodiment, living anionic polymerization by which an anionic active part is formed at a polymerization terminal through propagation polymerization reaction by anions. In addition, the polymerization in step 1 may be polymerization with heating, isothermal polymerization, or polymerization at a constant temperature (adiabatic polymerization). The polymerization at a constant temperature may mean a polymerization method including a step of polymerizing using self-generated heat of reaction without arbitrarily applying heat after injecting an organometallic compound, and the polymerization with heating may mean a polymerization method including injecting the organometallic compound and then, increasing the temperature by arbitrarily applying heat. The isothermal polymerization may mean a polymerization method by which the temperature of a polymer is kept constant by increasing heat by applying heat or taking heat after adding the organometallic compound.

In addition, the polymerization in step 1 may be performed in a temperature range of, for example, -20 to 80°C, 0 to 80°C, 10 to 80°C, or 10 to 70°C.

The active polymer prepared by step 1 may mean a polymer in which a polymeric anion and an organometallic cation are coupled.

Step 2 is a step of reacting the active polymer with the modifier represented by Formula 1 to prepare a modified conjugated diene-based polymer.

According to an embodiment of the present invention, the modifier represented by Formula 1 may be used in an amount of 0.1 to 100 g, 0.1 to 50 g, particularly, 0.1 to 25 g based on total 100 g of the monomer.

In addition, according to an embodiment of the present invention, the modifier represented by Formula 1 and the organometallic compound may be used in a molar ratio of 1: 0.1 to 1: 10, in a molar ratio of 1: 0.1 to 1: 5, or in a molar ratio of 1: 0.2 to 1: 4, and within this range, a modification reaction with optimum performance may be performed.

The reaction in step 2 is a modification reaction for introducing a functional group derived from the modifier, and may be performed at 0°C to 90°C for 1 minute to 5 hours.

In addition, according to an embodiment of the present invention, the method for preparing a modified conjugated diene-based polymer may be performed by a batch type or a continuous polymerization method including one or more reactors.

The method for preparing a modified conjugated diene-based polymer may further include, for example, one or more steps among a recovering step of a solvent and an unreacted monomer and a drying step, as necessary, after step 2 of the present invention.

### Rubber Composition

Further, the present invention provides a rubber composition including the modified conjugated diene-based polymer.

The rubber composition according to an embodiment of the present invention may include the modified conjugated diene-based polymer in an amount of 10 wt% or more, 10 wt% to 100 wt%, or 20 wt% to 90 wt%, and within this range, mechanical properties such as tensile strength and abrasion resistance are excellent, and effects of excellent balance among physical properties may be achieved.

In addition, the rubber composition may further include other rubber components, as necessary, in addition to the modified conjugated diene-based polymer, and in this case, the rubber component may be included in an amount of 90 wt% or less with respect to the total weight of the rubber composition. In a particular embodiment, the other rubber components may be included in an amount of 1 part by weight to 900 parts by weight with respect to 100 parts by weight of the modified conjugated diene-based polymer.

The rubber component may be, for example, a natural rubber or a synthetic rubber, and may particularly be a natural rubber (NR) including cis-1,4-polyisoprene; a modified natural rubber which is obtained by modifying or purifying a common natural rubber, such as an epoxidized natural rubber (ENR), a deproteinized natural rubber (DPNR), and a hydrogenated natural rubber; and a synthetic rubber such as a styrene-butadiene copolymer (SBR), a polybutadiene (BR), a polyisoprene (IR), a butyl rubber (IIR), an ethylene-propylene copolymer, a polyisobutylene-co-isoprene, a neoprene, a poly(ethylene-co-propylene), a poly(styrene-co-butadiene), a poly(styrene-co-isoprene), a poly(styrene-co-isoprene-co-butadiene), a poly(isoprene-co-butadiene), a poly(ethylene-co-propylene-co-diene), a polysulfide rubber, an acryl rubber, a urethane rubber, a silicone rubber, an epichlorohydrin rubber, a butyl rubber, and a halogenated butyl rubber, and any one or a mixture two or more thereof may be used.

The rubber composition may include a filler in 0.1 parts by weight to 200 parts by weight, or 10 parts by weight to 120 parts by weight based on 100 parts by weight of the modified conjugated diene-based polymer of the present invention. The filler may be, for example, a silica-based filler, particularly, wet silica (hydrated silicate), dry silica (anhydrous silicate), calcium silicate, aluminum silicate, or colloid silica. Preferably, the filler may be wet silica which has the most significant improving effects of destruction characteristics and compatible effects of wet grip. In addition, the rubber composition may further include a carbon-based filler, if necessary.

In another embodiment, if silica is used as the filler, a silane coupling agent may be used together for the improvement of reinforcing and low exothermic properties. Particular examples of the silane coupling agent may include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzolyltetrasulfide, 3-triethoxysilylpropylmethacrylatemonosulfide, 3-trimethoxysilylpropylmethacrylatemonosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, or dimethoxymethylsilylpropylbenzothiazolyltetrasulfide, and any one or a mixture of two or more thereof may be used. Preferably, bis(3-triethoxysilylpropyl)polysulfide or 3-trimethoxysilylpropylbenzothiazyltetrasulfide may be used in consideration of the improving effect of reinforcing properties.

In addition, in the rubber composition according to an embodiment of the present invention, since a modified conjugated diene-based polymer in which a functional group having high affinity with silica is brought in an active part is used as a rubber component, the mixing amount of the silane coupling agent may be smaller than a common case. Thus, the silane coupling agent may be used in 1 part by weight to 20 parts by weight, or 5 parts by weight to 15 parts by weight based on 100 parts by weight of silica. Within the above range, effects as a coupling agent may be sufficiently exhibited, and preventing effects of gelation of a rubber component may be achieved.

The rubber composition according to an embodiment of the present invention may be sulfur crosslinkable, and so may further include a vulcanizing agent. The vulcanizing agent may particularly be a sulfur powder and may be included in 0.1 parts by weight to 10 parts by weight based on 100 parts by weight of a rubber component. Within the above range, elasticity and strength required for a vulcanized rubber composition may be secured, and at the same time, a low fuel consumption ratio may be excellent.

The rubber composition according to an embodiment of the present invention may further include various additives used in a common rubber industry in addition to the above-described components, particularly, a vulcanization accelerator, a process oil, a plasticizer, an antiaging agent, a scorch preventing agent, a zinc white, stearic acid, a thermosetting resin, or a thermoplastic resin.

The vulcanization accelerator may include, for example, a thiazole-based compound such as 2-mercaptobenzothiazole (M), dibenzothiazyldisulfide (DM), and N-cyclohexyl-2-benzothiazylsulfenamide (CZ), or a guanidine-based compound such as diphenylguanidine (DPG), in 0.1 parts by weight to 5 parts by weight based on 100 parts by weight of the rubber component.

The process oil acts as a softener in a rubber composition and may include, for example, a paraffin-based, naphthene-based, or aromatic compound. An aromatic process oil may be used in consideration of tensile strength and abrasion resistance, and a naphthene-based or paraffin-based process oil may be used in consideration of hysteresis loss and properties at a low temperature. The process oil may be included in an amount of 100 parts by weight or less based on 100 parts by weight of the rubber component. Within the above range, the deterioration of the tensile strength and low exothermic properties (low fuel consumption ratio) of the vulcanized rubber may be prevented.

The antiaging agent may include, for example, N-isopropyl-N'-phenyl-p-phenylenediamine, N-(1,3-dimethylbutyl)-N'-phenyl-p-phenylenediamine, 6-ethoxy-2,2,4-trimethyl-1,2-dihydroquinoline, or a condensate of diphenylamine and acetone at a high temperature, in 0.1 parts by weight to 6 parts by weight based on 100 parts by weight of the rubber component.

The rubber composition according to an embodiment of the present invention may be obtained by mulling using a mulling apparatus such as a banbury mixer, a roll, and an internal mixer according to a mixing prescription. A rubber composition having low exothermic properties and good abrasion properties may be obtained by a vulcanization process after a molding process.

Therefore, the rubber composition may be useful to the manufacture of each member of a tire such as a tire tread, an under tread, a side wall, a carcass coating rubber, a belt coating rubber, a bead filler, a chafer, and a bead coating rubber, or to the manufacture of rubber products in various industries such as a vibration-proof rubber, a belt conveyor, and a hose.

Also, the present invention provides a tire manufactured using the rubber composition.

The tire may be a tire or include a tire tread.

### Examples

Hereinafter, the present invention will be explained in more detail referring to Examples. However, the Examples are for illustrating the present invention, and the scope of the present invention is not limited thereto.

### Preparation Example 1

### (1) Synthesis of 1,4-bis(3-chloropropoxy)benzene

To a 250 ml flask, hydroquinone (5.0 g, 45.4 mmol), 1-bromo-3-chloropropane (11.2 g), potassium phosphate (38.56 g) and methanol (45.4 ml) were put and refluxed overnight. After finishing the reaction, the reaction was quenched with water and dichloromethane. The resultant was finally dried to obtain a product.
¹H NMR(CDCl₃, 500 MHz): 6.84 ppm(s, 4H), 4.07 ppm(m, 4H), 3.74 ppm(m, 4H), 2.21 ppm(m, 4H)

### (2) Synthesis of 3,3'-(1,4-phenylenebis(oxy))bis(N,N-bis(3-(trimethoxysilyl)propyl)propan-1-amine)

To a 100 ml flask, 1,4-bis(3-chloropropoxy)benzene (5.7 g, 21.8 mmol), trimethylamine (4.6 ml), and bis(3-(trimethoxysilyl)propyl)amine (15.7 ml) were put and stirred at 150 °C overnight. After finishing the reaction, filtering and vacuum drying were performed to obtain a product.

H nuclear magnetic resonance spectrum was observed, and a compound represented as follows was identified.
¹H NMR(CDCl₃, 500 MHz): 6.80 ppm(s, 4H), 3.93 ppm(m, 4H), 3.55 ppm(s, 36H), 2.57 ppm(m, 4H), 2.41 ppm(m, 8H), 1.86 ppm(m, 4H), 1.53 ppm(m, 8H), 0.60 ppm(m, 8H)

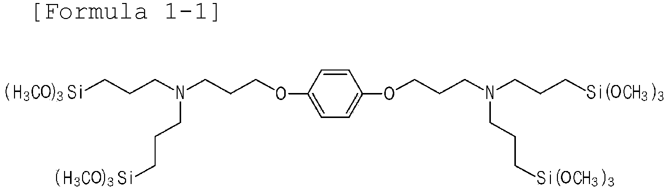

### Preparation Example 2

### (1) Synthesis of 1,5-bis(3-chloropropoxy)naphthalene

To a 250 ml flask, naphthalene-1,5-diol (5.0 g, 31.2 mmol), 1-bromo-3-chloropropane (7.72 g), potassium phosphate (26.5 g) and methanol (31.2 ml) were put and refluxed overnight. After finishing the reaction, the reaction was quenched with water and dichloromethane. The resultant was finally dried to obtain a product.
¹H NMR(CDCl₃, 500 MHz) : 7.81 ppm(m, 2H), 7.38 ppm(m, 2H), 6.86 ppm(m, 2H), 4.28 ppm(m, 4H), 3.70 ppm(m, 4H), 2.46 ppm(m, 4H)

### (2) Synthesis of 3,3'-(naphthalen-1,5-diylbis(oxy))bis(N,N-bis(3-(trimethoxysilyl)propyl)propan-1-amine)

To a 100 ml flask, 1,5-bis(3-chloropropoxy)naphthalene (5.1 g, 16.3 mmol), trimethylamine (6.8 ml), and bis(3-(trimethoxysilyl)propyl)amine (11.8 ml) were put and stirred at 150 °C overnight. After finishing the reaction, filtering and vacuum drying were performed to obtain a product.

H nuclear magnetic resonance spectrum was observed, and a compound represented as follows was identified.
¹H NMR(CDCl₃, 500 MHz): 7.79 ppm(s, 2H), 7.33 ppm(s, 2H), 4.18 ppm(m, 4H), 3.55 ppm(s, 36H), 2.95 ppm(m, 4H), 2.62 ppm(m, 4H), 1.67 ppm(m, 8H), 1.31 ppm(m, 8H), 0.62 ppm(m, 8H)

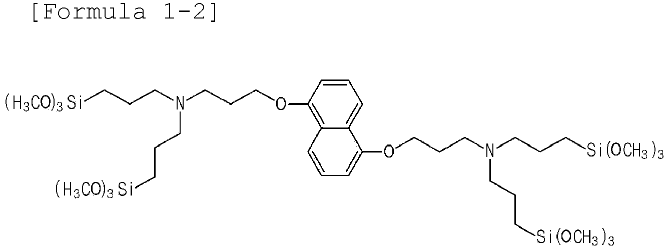

### Example 1

To a 20 L, autoclave reactor, 4.733 g of n-hexane, 375.0 g of styrene, 593.8 g of 1,3-butadiene, and 1.4 g of N,N,N',N'-tetramethylethylenediamine (TMEDA) as a polar additive were injected, and 5.0 g (10 wt% in n-hexane) of n-butyllithium was injected, and then, the internal temperature of the reactor was adjusted to 40°C, and adiabatic heating reaction was performed. After about 30 minutes, 31.3 g of 1,3-butadiene was injected for capping the terminal of a polymer with 1,3-butadiene.

Then, 2.0 g of a compound represented by Formula 1-1, prepared in Preparation Example 1 was added as a modifier (molar ratio of [TMEDA] : [act. Li] = 3.1: 1, molar ratio of [modifier]: [act. Li] = 0.3: 1). After that, the reaction was quenched using ethanol, and 17 g of a solution in which 30 wt% of a Wingstay K antioxidant was dissolved in hexane was added. The resultant polymer obtained was put in hot water heated with steam and stirred to remove the solvent, and then, roll-dried to remove remaining amounts of the solvent and water to prepare a modified styrene-butadiene copolymer.

### Example 2

A modified conjugated diene-based polymer was prepared by performing the same method as in Example 1 except for injecting 2.2 g of the compound represented by Formula 1-2, prepared in Preparation Example 2 as the modifier.

### Comparative Example 1

A dielectric styrene-butadiene copolymer was prepared by performing the same method as in Example 1 except for using 0.64 g of SiCl4 as the modifier with the molar ratio of [modifier]: [act. Li] = 0.48: 1.

### Comparative Example 2

A dielectric styrene-butadiene copolymer was prepared by performing the same method as in Example 1 except for using 0.97 g of N-methyl-3-(trimethoxysilyl)-N-(3-(trimethoxysilyl)propyl)propan-1-amine as the modifier with the molar ratio of [modifier]: [act. Li] = 0.35: 1.

### Comparative Example 3

A dielectric styrene-butadiene copolymer was prepared by performing the same method as in Example 1 except for using 1.4 g of tris(3-(trimethoxysilyl)propyl)amine as the modifier with the molar ratio of [modifier]: [act. Li] = 0.36: 1.

### Experimental Example 1

With respect to the modified conjugated diene-based polymers prepared in the Examples and Comparative Examples, the styrene unit content and the vinyl content in each polymer, a weight average molecular weight (Mw, ×10³ g/mol), a number average molecular weight (Mn, ×10³ g/mol), molecular weight distribution (MWD), and mooney viscosity (MV) were measured, respectively.

### 1) Styrene bond content and 1,2-vinyl bond content

The styrene bond content (SM) and 1,2-vinyl bond content (Vi) in each polymer were measured and analyzed using Varian VNMRS 500 MHz NMR. When measuring NMR, 1,1,2,2-tetrachloroethane was used as a solvent, and styrene unit bond content and 1,2-vinyl bond content were calculated by calculating a solvent peak as 6.00 ppm, and regarding 7.2-6.9 ppm as random styrene peaks, 6.9-6.2 ppm as block styrene peaks, 5.8-5.1 ppm as 1,4-vinyl and 1,2-vinyl peaks, and 5.1-4.5 ppm as 1,2-vinyl peaks.

### 2) Weight average molecular weight, number average molecular weight, and molecular weight distribution

By gel permeation chromatography (GPC) analysis, the weight average molecular weight (Mw) and the number average molecular weight (Mn) were measured, and the molecular weight distribution (MWD, Mw/Mn) was calculated from each molecular weight thus measured.

Particularly, the GPC was performed by using two columns of PLgel Olexis (Polymer Laboratories Co.) and one column of PLgel mixed-C (Polymer Laboratories Co.) in combination, and newly replaced columns were all mixed bed type columns. For calculating the molecular weight, polystyrene (PS) was used as a GPC standard material.

### 3) Mooney viscosity

The mooney viscosity (MV, (ML1+4, @100°C MU)) was measured using MV2000 (ALPHA Technologies Co.) at a rotor speed of 2 ± 0.02 rpm at 100°C using Large Rotor. In this case, a specimen used was stood at room temperature (23 ± 5°C) for 30 minutes or more, 27 ± 3 g was collected and put in a die cavity, a platen was operated, and the mooney viscosity was measured for 4 minutes.

**[Table 1]**

| | Example 1 | Example 2 | Comparative Example 1 | Comparative Example 2 | Comparative Example 3 |
|---|---|---|---|---|---|
| SM (wt%) | 36 | 36 | 36 | 36 | 36 |
| Vi (wt%) | 26 | 26 | 26 | 26 | 26 |
| Mw (×10⁴ g/mol) | 120 | 112 | 88 | 87 | 94 |
| Mn (×10⁴ g/mol) | 63 | 60 | 40 | 48 | 52 |
| Mw/Mn | 1.91 | 1.86 | 2.21 | 1.81 | 1.80 |
| MV | 96 | 94 | 75 | 87 | 91 |

As the results above, if compared with the Comparative Examples, it was confirmed that the modified conjugated diene-based polymers of the Examples, using the modifier represented by Formula 1 according to the present invention showed markedly higher molecular weights than the Comparative Examples but relatively not much increment of the mooney viscosity. The results show that the modified conjugated diene-based polymers prepared in the Examples had a star-type polymer shape. In addition, the modified conjugated diene-based polymers of the Examples, having such a structure were found to show improved processability and excellent abrasion resistance due to high molecular weight characteristics.

### Experimental Example 2

In order to comparatively analyze the physical properties of rubber compositions including the modified conjugated diene-based copolymers prepared in the Examples and Comparative Examples, and molded articled manufactured therefrom, tensile properties, abrasion resistance and wet skid resistance were measured, respectively.

### 1) Manufacture of rubber specimen

Compounding was performed using the modified conjugated diene-based polymers of the Examples and Comparative Examples as raw material rubber under the compounding conditions shown in Table 2 below. The amounts of the raw materials in Table 2 are represented by parts by weight based on 100 parts by weight of the raw material rubber.

**[Table 2]**

| Division | Raw material | Amount (parts by weight) |
|---|---|---|
| First stage mulling | Rubber | 100 |
| | Silica | 70 |
| | Coupling agent | 11.2 |
| | Process oil | 25 |
| | Zinc white | 3 |
| | Stearic acid | 2 |
| | Antioxidant | 2 |
| | Antiaging agent | 2 |
| | wax | 1 |
| Second stage mulling | Sulfur | 1.5 |
| | Rubber accelerator | 1.75 |
| | Vulcanization accelerator | 2 |

Particularly, the rubber specimen was mulled via a first stage mulling and a second stage mulling. In the first stage mulling, a raw material rubber, silica (filler), an organic silane coupling agent (X50S, Evonik), a process oil (TDAE oil), zinc oxide (ZnO), stearic acid, an antioxidant (TMQ (RD)) (2,2,4-trimethyl-1,2-dihydroquinoline polymer), an antiaging agent (6PPD ((dimethylbutyl)-N-phenyl-phenylenediamine) and wax (Microcrystaline Wax) were mulled using a banbury mixer equipped with a temperature controlling apparatus. In this case, the temperature of a mulling apparatus was controlled, and a first compound mixture was obtained at a discharge temperature of 150°C. In the second stage mulling, the first compound mixture was cooled to room temperature, and the first compound mixture, sulfur powder, a rubber accelerator (DPD (diphenylguanine)), and a vulcanization accelerator (CZ (N-cyclohexyl-2-benzothiazylsulfenamide)) were added to the mulling apparatus and mixed at a temperature of 100°C or less to obtain a second compound mixture. Then, via a curing process at 160°C for 20 minutes, a rubber specimen was manufactured.

### 2) Tensile properties

For measuring tensile properties, based on ASTM 412 tensile test method, each specimen was manufactured, and tensile stress (300% modulus) when stretching 300% of the test specimen, breaking strength of the test specimen (tensile strength), and elongation were measured.

Particularly, tensile properties were measured using a Universal Test Machin 4204 tensile tester (Instron Co.) in a rate of 50 cm/min at room temperature. In Table 3, the resultant values are shown by index (%) based on the resultant values of Comparative Example 1, and the higher numerical value represents better results.

### 3) Viscoelasticity properties

The viscoelasticity properties were obtained by changing deformation at each measurement temperature (-60°C-60°C) with a frequency of 10 Hz in a twist mode by using a dynamic mechanical analyzer (TA Co.), and measuring a tan δ value. Payne effect was shown as a difference between the minimum value and the maximum value at the deformation of 0.28% to 40%. If the tan δ value at a low temperature of 0°C increases, wet skid resistance is excellent, and if the tan δ value at a high temperature of 60°C decreases, hysteresis loss becomes small, and rotation resistance (a fuel consumption ratio) becomes good. However, in Table 3, the resultant values are shown by index based on the resultant values of Comparative Example 1, and the higher numerical value represents better results.

### 4) Processability properties

The mooney viscosity (MV, (ML1+4, at 100°C MU)) of the secondary compound obtained during the 1) manufacturing of rubber specimen was measured, and the processability properties of each polymer were comparatively analyzed. In this case, if the mooney viscosity measurement value decreases, the processability properties are excellent, but the resultant values in Table 3 are indexed and shown based on the measurement value of Comparative Example 1, and if the value increases, the properties are excellent.

Particularly, measurement was conducted using MV2000 (ALPHA Technologies Co.) at a rotor speed of 2 ± 0.02 rpm at 100°C using Large Rotor. Each secondary compound was stood at room temperature (23 ± 5°C) for 30 minutes or more, 27 ± 3 g was collected and put in a die cavity, a platen was operated, and measurement was conducted for 4 minutes.

### 5) Abrasion resistance (DIN abrasion test)

For each rubber specimen, DIN abrasion test was performed based on ASTM D5963, and shown by DIN loss index (loss volume index: ARIA (abrasion resistance index, Method A)). The higher numerical value represents better results.

**[Table 3]**

| Division | | Example | | Comparative Example | | |
|---|---|---|---|---|---|---|
| | | 1 | 2 | 1 | 2 | 3 |
| Tensile properties (kgf/cm²) | M300 | 115 | 113 | 100 | 108 | 109 |
| | Tensile strength | 105 | 106 | 100 | 100 | 90 |
| | Elongation rate | 99 | 100 | 100 | 100 | 98 |
| Viscoelasticity properties (index, %) | tan δ @0°C | 105 | 106 | 100 | 106 | 105 |
| | tan δ @70°C | 117 | 116 | 100 | 108 | 109 |
| Processability properties (index, %) | | 106 | 105 | 100 | 96 | 93 |
| Abrasion resistance | | 123 | 118 | 100 | 108 | 110 |

As shown in Table 3, it was confirmed that the modified conjugated diene-based polymers of the Examples had improved effects of tensile properties, viscoelasticity properties, abrasion resistance and processability properties in balance.

Through the results, it is confirmed that the modified conjugated diene-based polymer of the present invention includes a functional group derived from the modifier represented by Formula 1, and a polymer having a high molecular weight can be formed, and a rubber composition including the modified conjugated diene-based polymer shows improved abrasion resistance properties. In addition, it means that affinity with a filler is excellent, and the processability and tensile properties of a rubber composition including the modified conjugated diene-based polymer are all improved. Through this, it can be found that the modified conjugated diene-based polymer of the present invention is modified by the modifier represented by Formula 1, and remarkable effects that cannot be achieved by a polymer modified with other modifier having a similar structure, can be obtained.

## Claims

1. A modifier represented by the following Formula 1: 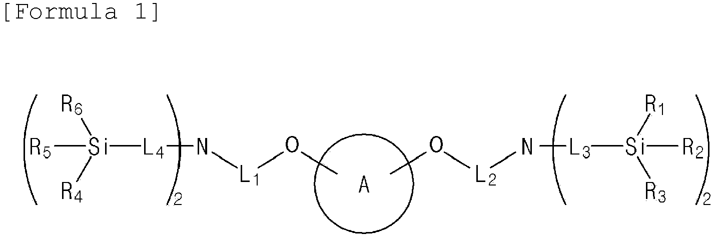 in Formula 1,
A is an arylene group of 6 to 20 carbon atoms or a heteroarylene group of 5 to 20 carbon atoms,
L₁ and L₂ are each independently an alkylene group of 1 to 20 carbon atoms,
L₃ and L₄ are each independently an alkylene group of 1 to 20 carbon atoms, and
R₁ to R₆ are each independently an alkyl group of 1 to 10 carbon atoms or an alkoxy group of 1 to 20 carbon atoms, where at least one among R₁ to R₃ is an alkoxy group of 1 to 20 carbon atoms, and at least one among R₄ to R₆ is an alkoxy group of 1 to 20 carbon atoms.

2. The modifier according to claim 1, wherein, in Formula 1, A is an arylene group of 6 to 10 carbon atoms or a heteroarylene group of 5 to 10 carbon atoms.

3. The modifier according to claim 1, wherein, in Formula 1,
L₁ and L₂ are each independently an alkylene group of 1 to 10 carbon atoms, and L₁ and L₂ are the same,
L₃ and L₄ are each independently an alkylene group of 1 to 10 carbon atoms, and L₃ and L₄ are the same.

4. The modifier according to claim 1, wherein, in Formula 1, R₁ to R₆ are each independently an alkoxy group of 1 to 10 carbon atoms.

5. The modifier according to claim 1, wherein the modifier represented by Formula 1 is selected from compounds represented by the following Formula 1A and Formula 1B: 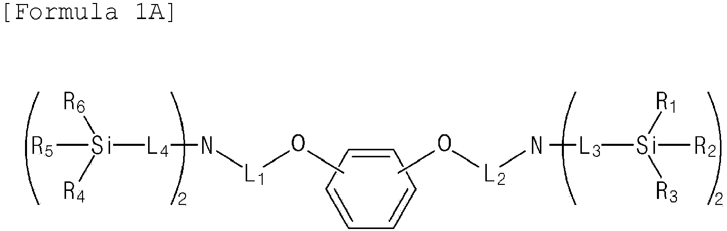 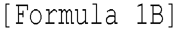 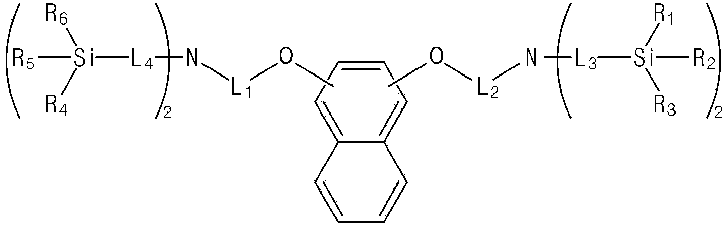 in Formula 1A and Formula 1B,
the definition of L₁ to L₄ and R₁ to R₆ is the same as the definition in Formula 1.

6. The modifier according to claim 1, wherein the modifier represented by Formula 1 is selected from compounds represented by the following Formula 1-1 and Formula 1-2:
